# EUROPEAN PATENT SPECIFICATION

(11) **EP 1 311 739 B1**
(45) Date of publication and mention of the grant of the patent: **21.03.2007**
(21) Application number: 01960919.7
(22) Date of filing: 22.08.2001
(51) Int. Cl.: E21B 17/01, F16L 59/14, F16L 9/00, F16L 1/12

(54) **PIPE ASSEMBLY**
ROHRLEITUNG
ASSEMBLAGE DE TUYAU

(30) Priority: 22.08.2000 GB 0020552
(43) Date of publication of application: 21.05.2003
(73) Proprietor: Trelleborg CRP Ltd, Stanley Skelmersdale Lancashire WN8 8EA (GB)
(72) Inventor: TYRER, Andrew Charles Ratcliffe, Merseyside L37 1LN (GB); GIBSON, Robert, Bolton, Lancashire BL6 4DT (GB); HEPWORTH, Richard, Lancashire PR7 4EY (GB)
(74) Representative: W.P. Thompson & Co.
(86) International application number: PCT/GB2001/003772
(87) International publication number: WO 2002/016726

(56) References cited:
- GB-A- 2 268 564
- GB-A- 2 271 410
- US-A- 3 811 477

## Description

The present invention relates to pipe assemblies, and in particular, but not exclusively, to underwater pipe assemblies for conveying oil, gas, condensate and other flowable fluids from a wellhead.

When oil and/or other fluids are extracted from an underwater wellhead, it is necessary to convey the fluids to a production platform where it can be distributed to, for example, a tanker or into a further oil pipeline for onward transmission. This is normally achieved by means of a steel catenary riser (SCR) which extends between the production platform and the seabed and a flowline connecting the lower end of the SCR to the wellhead.

When the oil and/or other fluid emerges from the wellhead it is at an elevated temperature (typically between 80° and 90° C but sometimes far higher). It is important to maintain the oil or other fluids within the SCR at an elevated temperature since an excessive drop in temperature causes components to solidify, resulting in blockage of the conduit and loss of production, and requiring expensive treatment to rectify the problem. This can be a significant problem since flowlines can be of a considerable length (of the order of 30km) and they often pass through water which is only a few degrees above freezing point. Thus, unless the pipe is insulated along its length the heat loss from the pipe may result in pipe blockage.

One solution is to use a "pipe-in-pipe" system in which the oil or other fluid flows through an inner pipe which is itself located within a larger outer pipe, heated liquid being passed into the annular space between the two pipes in order to keep the oil at an elevated temperature. However, this can be a problem for very lengthy flowlines, since the heating fluid itself tends to lose a great deal of heat.

An alternative is to utilise passive insulation techniques in which the carrying pipe is clad with an insulating material which retains the contents at a sufficiently high temperature to prevent solidification or waxing of its components. A typical insulating material is syntactic polyurethane, comprising glass microspheres intimately mixed with polyurethane resin which is moulded around the exterior pipe..

Whilst such passive insulation techniques are very effective at maintaining the oil at an elevated temperature and whilst they allow the pipe to flex, they suffer from the disadvantage that the weight of SCRs insulated in this way can be very substantial, particularly in deep-water situations. The weight of such insulated SCRs can be such that unacceptably large forces are induced on the oil platform or other structure to which the upper end of the SCR is connected.

One solution is to clamp buoyancy modules onto the exterior of the insulated pipe, which results in a reduction of the effective weight of the SCR and consequently a reduction in the forces on the structure to which the upper end of the SCR is connected. However, problems then arise in the laying of the pipe. SCRs are normally laid in position by passing the pipe through a series of guide rollers (known as a "stinger") positioned on a pipe-laying ship. It is thus not possible to lay the insulated pipe with the buoyancy modules already attached since they would not pass through the stinger. Thus, the buoyancy modules would have to be attached after the pipe had passed through the stinger, whilst in the water, which would be time consuming and very expensive.

Reference is also made to US-A-3 811 477, which discloses a buoyant liquid-conveying hose in which a hose body is surrounded by a first layer of buoyancy material with a second layer of different buoyancy material surrounding the first layer and a water-impermeable covering over the second layer.

There is thus a requirement for a pipe assembly which both insulates the pipe to retain its contents at an elevated temperature and which can accommodate flexing of the pipe but which imposes lower forces on the structure to which it is connected.

In accordance with a first aspect of the present invention, a pipe assembly comprises a flexible insulating material in contact with the outer surface of the pipe and a plurality of discrete spaced apart buoyant bodies embedded in the flexible insulating material around the pipe.

By arranging the flexible insulating material in contact with the pipe, the contents of the pipe are retained at an elevated temperature whilst allowing the pipe assembly to flex. The buoyant bodies increase the buoyancy of the pipe, thereby reducing its effective weight in water. The provision of discrete buoyant bodies embedded within the insulating material allows relative movement between the bodies and enables the pipe to flex without damaging the buoyant bodies.

Preferably, the flexible insulating material forms a layer in contact with the pipe. Preferably the layer of flexible insulating material in contact with the pipe is continuous.

The buoyant bodies are preferably spaced apart in the longitudinal direction of the pipe and are preferably regularly spaced. Adjacent buoyant bodies are preferably separated by the flexible insulating material.

In a preferred embodiment, at least one of the buoyant bodies is annular and preferably the pipe assembly comprises a plurality of annular buoyant bodies.

At least one of the annular buoyant bodies may be formed from a plurality of part-annular bodies, e.g. semi-annular bodies. This is particularly useful at the junction between the ends of two preformed lengths of pipe assembly where it is necessary to weld the ends of the pipe together. The use of an annular buoyant body would not be possible in such locations but part-annular buoyant bodies (e.g. semi-annular bodies) can be located around the weld area subsequent to welding together of the two pipe ends, and subsequently embedded in further flexible insulating material.

In one embodiment, the pipe assembly comprises a plurality of preformed pipe assemblies in accordance with the present invention, wherein the ends of the pipe of each preformed pipe assembly project beyond the flexible insulating material and the buoyant bodies and the ends of adjacent pipes are joined together, the part-annular buoyant bodies being located around the joined ends of the pipes.

Preferably, at least one, and preferably more, of the buoyant bodies is tubular.

In one embodiment, at least one, and preferably more, of the buoyant bodies is completely surrounded by the flexible insulating material.

The outer surface of the pipe assembly is preferably partially formed by the flexible insulating material and in one embodiment is wholly formed by the flexible insulating material.

In another embodiment, the outer surface of the pipe assembly is at least partially formed by at least one, and preferably more than one, of the buoyant bodies. At least one of said buoyant bodies may be reinforced or strengthened in that region forming the outer surface. For example, at least one of the buoyant bodies may comprise a reinforced outer surface e.g. a fibre reinforced plastics material.

In one embodiment, the pipe assembly further comprises a layer of additional material located between at least one of the buoyant bodies and the flexible insulating material in contact with the pipe. The layer of additional material may comprise an insulating material and is preferably different from the flexible insulating material. The layer of additional material may be less flexible than the flexible insulating material in contact with the pipe.

The layer of additional material may be in contact with at least one of the buoyant bodies and may form part of a buoyant body.

In accordance with a second aspect of the present invention, a pipe assembly comprises a plurality of preformed pipe assemblies in accordance with the present invention, joined end-to-end.

In accordance with a third aspect of the present invention, a method of producing a pipe assembly in accordance with the present invention comprises positioning a section of pipe in a mould, positioning the buoyant bodies in the mould, spaced from the pipe, introducing a liquefied flexible insulating material into the mould around the pipe and the buoyant bodies and allowing the liquefied flexible insulating material to harden.

In accordance with a further aspect of the present invention, a method of producing a pipe assembly comprises joining together the pipes of two preformed pipe assemblies and moulding a layer of flexible insulating material around the joined ends of the two joined pipes.

Preferably, an additional buoyant body is positioned around the joined ends of the joined pipes, spaced from the joined pipes, and a layer of flexible insulating material is moulded around the joined ends of the pipes and around the buoyant body. Preferably, the additional buoyant body is annular and conveniently it is formed from a plurality of part-annular bodies.

By way of example only, specific embodiments of the present invention will now be described, with reference to the accompanying drawings in which, -
Fig. 1 is a longitudinal cross-section through an embodiment of pipe clad in accordance with the present invention;
Fig. 2 is a transverse cross-section looking in the direction of arrows II-II of Fig. 1;
Fig. 3 is a longitudinal cross-section through a second embodiment of pipe clad in accordance with the present invention;
Fig. 4 is a longitudinal cross-section through a third embodiment of pipe in accordance with the present invention;
Fig. 5 is a transverse cross section looking in the direction of arrows V-V of Fig. 4;
Fig. 6 is an enlarged view of the portion indicated at A in Fig. 4;
Fig. 7 is a longitudinal cross-section through a fourth embodiment of pipe clad in accordance with the present invention; and
Fig. 8 is a transverse cross-section looking in the direction of arrows VII-VII of Fig. 7.

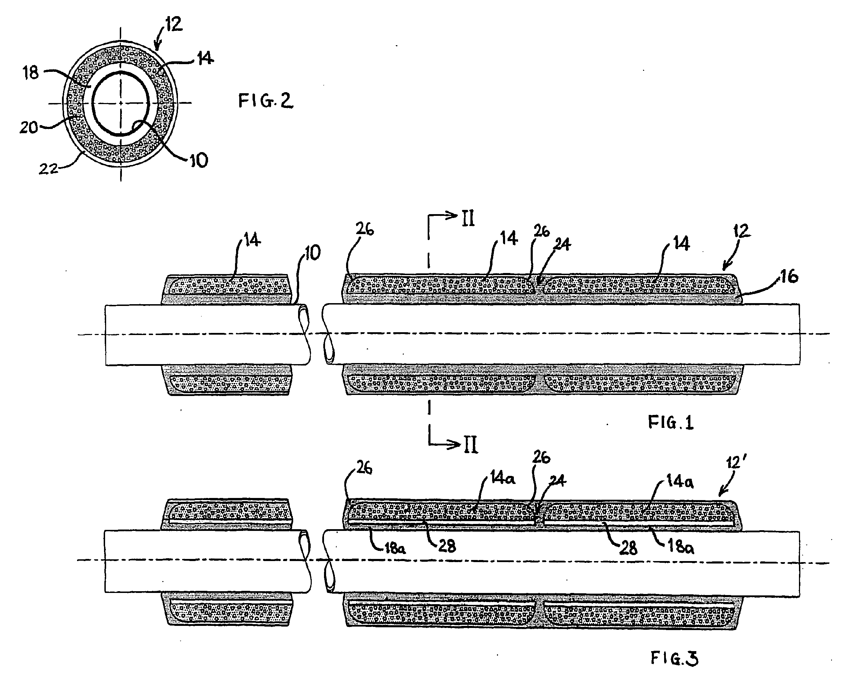

Referring firstly to Figs 1 and 2, a conventional tubular steel pipe 10 of internal diameter 12.75 inches (32.385 cms) and having a conventional fusion bonded epoxy (FBE) exterior coating is clad on its exterior with a tubular coating or cladding 12 which provides both insulation and increased buoyancy. The coating 12 comprises a plurality of spaced-apart annular buoyancy rings 14 which are embedded in a flexible insulating material 16. The pipe is manufactured from preformed sections approximately 12 metres in length and the cladding 12 is omitted from approximately the last 14 inches (35.56cms) of each end of the pipe, to allow the ends of two preformed pipe sections to be secured together by conventional welding techniques.

The buoyancy rings 14 are tubular and are preformed by a conventional moulding technique. They are approximately 1.38 metres in length and longitudinally adjacent buoyancy members are separated from each other by a longitudinal distance of approximately 2 inches (5.08cm). Eight buoyancy rings 14 are provided on each preformed length of pipe and are formed from hollow macrospheres approximately 1 cm in diameter embedded in epoxy resin. The insulating material 16 comprises syntactic polyurethane, ie glass microspheres intimately mixed with polyurethane resin which is allowed to solidify.

In order to construct the clad pipe, eight buoyancy rings 14 are located around a length of pipe and the pipe and the buoyancy rings are held in position in a mould. Liquid syntactic polyurethane is then pumped into the mould and makes its way into the gaps between the tubular inner surface of the buoyancy rings 14 and the outer surface of the pipe. The FBE coating provides a "key" for the polyurethane and helps to secure the coating to the pipe In the embodiment illustrated in Figs. 1 and 2, the syntactic polyurethane 16 also extends over the outer surface of the buoyancy rings 14.

Thus, as illustrated in the figures, in cross section through the pipe, the cladding comprises an inner layer 18 of syntactic polyurethane, a buoyancy layer 20 radially outward of the inner layer formed from the hollow macrospheres embedded in epoxy resin and an outer protective layer 22 of syntactic polyurethane. The gaps between the ends of adjacent buoyancy rings 14 are also filled with the flexible syntactic polyurethane and form flex joints 24. The flexibility of the flex joints 24 is enhanced by rounding the outer shoulders 26 of the buoyancy rings 14 at each end.

In practice, the ends of a series of preformed clad pipe sections are welded together, forming a clad pipe of the desired length. More syntactic polyurethane is moulded around the welded end regions of adjacent pipe sections to provide insulation in those regions, in a conventional manner.

The provision of a layer of insulating material immediately outwardly of the pipe along its entire length greatly reduces the loss of heat from the liquid passing through the pipe. Furthermore, the buoyancy rings 14 embedded within the insulating material provide a significantly increased buoyancy for the assembly, thereby reducing the stresses on the pipe and on the constructions to which the pipe is connected. Finally, a protective layer of insulating material protects the outer surface of the construction. The syntactic polyurethane also generates buoyancy as its density will be less than that of the surrounding sea water.

Such a construction thus satisfies the requirements of heat insulation and increased buoyancy while at the same time having a smooth profile, thereby making it suitable for being laid by conventional pipe-laying apparatus. Moreover, since the buoyancy rings are separated from one another and from the pipe by flexible polyurethane, the clad pipe may flex as it is laid and in use without damaging the buoyancy rings, the flex joints 24 and the inner layer 18 of syntactic polyurethane providing the desired flexibility.

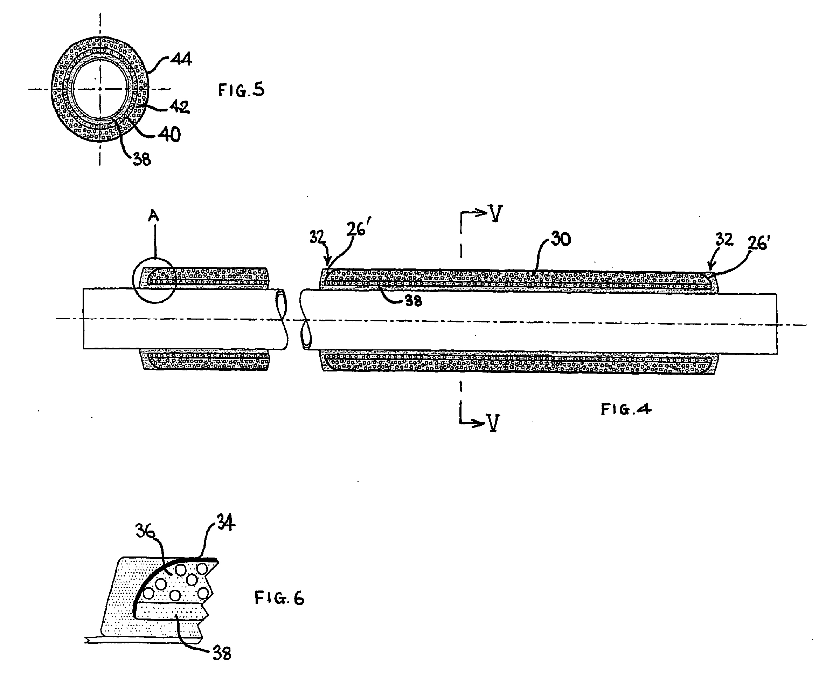

A modification of the embodiment of Figs. 1 and 2 is illustrated in Fig. 3. This is virtually identical to the embodiment of Figs. 1 and 2 and the same reference numerals are used to denote corresponding features. The only difference is that, as compared with the first embodiment, the inner insulating layer 18a is reduced in thickness and each buoyancy ring 14a is provided with an inner tubular layer 28 of epoxy resin having no macrospheres in addition to a main layer 14a of hollow mini macrospheres embedded in epoxy resin, as for the first embodiment.

The use of an additional inner layer 28 of epoxy resin and the consequent reduction in the thickness of the inner insulating layer 18a of syntactic polyurethane reduces the amount of syntactic polyurethane which is required, which reduces the cost of the construction since epoxy resin is cheaper (albeit less flexible) than syntactic polyurethane and yet has superior insulating qualities. However, the layer 18a of flexible syntactic polyurethane adjacent to the outer surface of the pipe is still required to allow the pipe 10 and its cladding 12' to flex.

In the embodiment of Figs. 4, 5 and 6, only four buoyancy rings 30 are used for each 12 metre section of pipe but the buoyancy rings are approximately twice the length of those of the previous embodiments. The buoyancy rings 30 are tubular and it will be observed that the tubular outer surface of the buoyancy rings forms the outer surface of the clad pipe, except in those regions adjacent to the ends of the buoyancy rings, which form flex joints 32, similar to the flex joints 24 of the first embodiment. As for the previous embodiments, the outer shoulders 26' of the buoyancy rings 30 are rounded at each end.

In order to provide the necessary resistance to abrasion, the buoyancy rings 30 comprise an outer skin 34 of fibre reinforced plastics, beneath which are provided a layer 36 of hollow macrospheres approximately 1cm in diameter embedded in epoxy resin and an inner layer 38 of pure epoxy resin, identical to the layers 14a and 28 respectively of the second embodiment. However, other buoyancy formulations, such as that of the first embodiment, could be used if desired. The buoyancy rings 30 are formed by laying down a layer of fibre reinforced plastics material on the surface of a mould and depositing the other layers 36, 38 subsequently.

The clad pipe is constructed in an otherwise identical manner to that of the first two embodiments, with the preformed buoyancy rings 30 being located around a length of pipe in a mould and syntactic polyurethane being poured into the mould and being allowed to cure and harden. However, the tubular outer surfaces of the buoyancy rings are in contact with the mould wall and thus are not coated with syntactic polyurethane. Thus, the construction provides an inner layer 38 of insulating syntactic polyurethane, an inner buoyancy layer 40 forming part of the buoyancy ring 30, an outer buoyancy layer 42 forming part of the buoyancy ring 30 and an outer protective skin 44 of fibre reinforced plastics.

The construction greatly reduces the amount of heat escaping from the pipe yet the provision of the flexible syntactic polyurethane adjacent to the pipe and between the ends of adjacent buoyancy rings allows the pipe to flex without the risk of damaging the buoyancy rings. Again, the pipe section has a smooth profile, enabling it to be laid by conventional pipe-laying equipment.

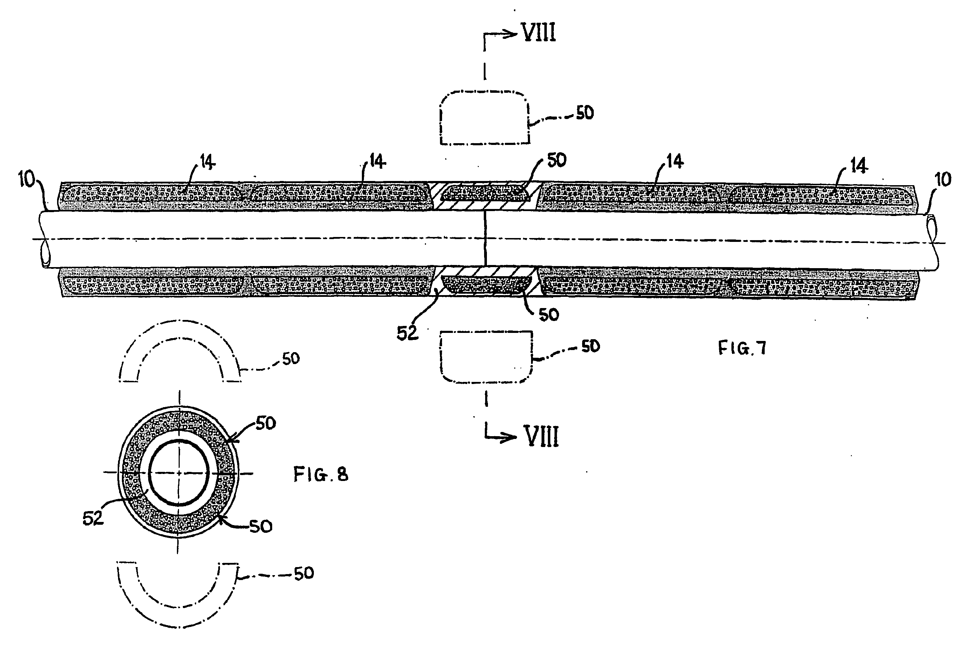

A fourth embodiment is illustrated in figs 7 and 8. As mentioned previously, when the ends of two adjacent preformed clad pipe sections are secured together, syntactic polyurethane is normally moulded around the welded area so that the pipe is insulated along its entire length. However, significant lengths of the pipe will thereby comprise solely insulating material without any material of increased buoyancy.

In the embodiment of Figs. 7 and 8, after the ends of two adjacent clad pipe sections are welded together, two semi-annular buoyancy members 50 are located around the welded area and a mould is formed around the welded area in the conventional manner. In the embodiment illustrated the semi-annular buoyancy members 50 are formed from the same material as that of the embodiment of Figs. 1 and 2 but any buoyancy material may be used, for example the buoyancy material used in the embodiments of Figs. 3 and 4. The semi-annular buoyancy members 50 abut each other effectively to form an annular buoyancy member around which further syntactic polyurethane 52 is moulded, embedding the semi-annular buoyancy bodies within the flexible syntactic polyurethane.

In this way, the entire length of the pipe is clad in material which provides both insulation immediately adjacent to the pipe and increased buoyancy further outwardly thereof.

It would also be possible to provide semi-annuler buoyancy bodies of a type corresponding to the buoyancy rings shown in the embodiment of Figs. 5 and 6, with an outer fibre reinforced skin. However, it is thought that it would be preferable to use semi-tubular buoyancy bodies which are completely encapsulated in flexible syntactic polyurethane 52, otherwise the joints between the semi-annular buoyancy bodies would be exposed to sea water and would require further sealing before use.

The invention is not restricted to the details of the foregoing embodiments. For example, some or all of the syntactic polyurethane may be replaced with pure polyurethane, i.e. polyurethane without the addition of glass microspheres.

## Claims

1. A pipe assembly comprising a flexible insulating material (16) in contact with the outer surface of the pipe (10) and a plurality of discrete spaced apart buoyant bodies (14) embedded in the flexible insulating material around the pipe.

2. A pipe assembly as claimed in claim 1, comprising a layer of the flexible insulating material (16) in contact with the pipe.

3. A pipe assembly as claimed in claim 2, wherein the layer of the flexible insulating material (16) in contact with the pipe is continuous.

4. A pipe assembly as claimed in any of claims 1 to 3, wherein the buoyant bodies (14) are spaced apart in the longitudinal direction of the pipe.

5. A pipe assembly as claimed in any of the preceding claims, wherein the buoyant bodies (14) are regularly spaced.

6. A pipe assembly as claimed in any of the preceding claims, wherein adjacent buoyant bodies (14) are separated by said flexible insulating material (16).

7. A pipe assembly as claimed in any of the preceding claims, wherein at least one of the buoyant bodies (14) is annular.

8. A pipe assembly as claimed in claim 7, comprising a plurality of annular buoyant bodies (14).

9. A pipe assembly as claimed in claim 7 or claim 8, wherein at least one of the annular buoyant bodies is formed from a plurality of part-annular bodies (50).

10. A pipe assembly as claimed in claim 9, wherein the part-annular bodies (50) are semi-annular.

11. A pipe assembly as claimed in claim 9 or claim 10, comprising a plurality of preformed pipe assemblies as claimed in any of the preceding claims, wherein the ends of the pipe (10) of each preformed pipe assembly project beyond the flexible insulating material (16) and the buoyant bodies (14), and the ends of adjacent pipes are joined together, and the part annular buoyant bodies being located around the joined ends of the pipes (10).

12. A pipe assembly as claimed in any of claims 7 to 11, wherein at least one of the buoyant bodies (14) is tubular.

13. A pipe assembly as claimed in claim 12, comprising a plurality of tubular buoyant bodies (14).

14. A pipe assembly as claimed in any of the preceding claims, wherein at least one of the buoyant bodies (14) is completely surrounded by the flexible insulating material (16).

15. A pipe assembly as claimed in claim 14, comprising a plurality of buoyant bodies (14) completely surrounded by the flexible insulating material.

16. A pipe assembly as claimed in claim 14 or claim 15, wherein the outer surface is at least partially formed by the flexible insulating material (16).

17. A pipe assembly as claimed in claim 16, wherein the outer surface is wholly formed by the flexible insulating material (16).

18. A pipe assembly as claimed in any of claims 1 to 16, wherein the outer surface is at least partially formed by at least one of said buoyant bodies (14).

19. A pipe assembly as claimed in claim 18, wherein the outer surface is at least partially formed by a plurality of said buoyant bodies (14).

20. A pipe assembly as claimed in claim 18 or 19, wherein at least one of said buoyant bodies (14) is reinforced or strengthened in that region forming the outer surface.

21. A pipe assembly as claimed in any of the preceding claims, comprising a layer (28) of additional material located between at least one of the buoyant bodies (14a) and the flexible insulating material (16) in contact with the pipe (10).

22. A pipe assembly as claimed in claim 21, wherein the layer (28) of additional material comprises an insulating material.

23. A pipe assembly as claimed in claim 20 or claim 21, wherein the additional material is different from the flexible insulating material (16).

24. A pipe assembly as claimed in claim 23, wherein the layer (18) of additional material is in contact with at least one of the buoyant bodies (14).

25. A pipe assembly as claimed in claim 24, wherein the layer (28) of additional material forms part of the at least one of the buoyant bodies.

26. A pipe assembly comprising a plurality of preformed pipe assemblies as claimed in any of the preceding claims, joined end-to-end.

27. A pipe assembly as claimed in claim 26, wherein the ends of the pipe (10) of each preformed pipe assembly project beyond the flexible insulating material (16).

28. A method of producing a pipe assembly as claimed in any of the preceding claims, comprising positioning a section of pipe (10) in a mould, positioning the buoyant bodies (14) in the mould, spaced from the pipe, introducing a liquefied flexible insulating material into the mould around the pipe and the buoyant bodies and allowing the liquiefied flexible insulating material to harden.

29. A method of producing a pipe assembly as claimed in claim 24 or claim 25, comprising joining together the pipes of two preformed pipe assemblies and moulding a layer of flexible insulating material around the joined ends of the two joined pipes.

30. A method as claimed in claim 29, comprising positioning an additional buoyant body (50) around the joined ends of the joined pipes, spaced from the joined pipes, and moulding a layer of flexible insulating material (16) around the joined ends of the pipes and around the buoyant body (50).

31. A method as claimed in claim 30, wherein the additional buoyant body is annular.

32. A method as claimed in claim 31, wherein the annular body is formed from a plurality of part-annular bodies (50).

## Patentansprüche

1. Rohreinheit, umfassend ein flexibles Isoliermaterial (16), das mit der Außenseite des Rohrs (10) in Berührung ist und eine Vielzahl von in diskreten Abständen voneinander angeordneten, schwimmfähigen Körpern (14), die in dem flexiblen Isoliermaterial um das Rohr eingebettet sind.

2. Rohreinheit nach Anspruch 1, umfassend eine Schicht des flexiblen Isoliermaterials (16), die mit dem Rohr in Berührung ist.

3. Rohreinheit nach Anspruch 2, wobei die Schicht des flexiblen Isoliermaterials (16), die mit dem Rohr in Berührung ist, durchgehend ist.

4. Rohreinheit nach einem der Ansprüche 1 bis 3, wobei die schwimmfähigen Körper (14) in der Längsrichtung des Rohrs in Abständen voneinander angeordnet sind.

5. Rohreinheit nach einem der vorangehenden Ansprüche, wobei die schwimmfähigen Körper (14) in regelmäßigen Abständen voneinander angeordnet sind.

6. Rohreinheit nach einem der vorangehenden Ansprüche, wobei benachbarte schwimmfähige Körper (14) durch das flexible Isoliermaterial (16) getrennt sind.

7. Rohreinheit nach einem der vorangehenden Ansprüche, wobei mindestens einer der schwimmfähigen Körper (14) ringförmig ist.

8. Rohreinheit nach Anspruch 7, umfassend eine Vielzahl von ringförmigen, schwimmfähigen Körpern (14).

9. Rohreinheit nach Anspruch 7 oder Anspruch 8, wobei mindestens einer der ringförmigen, schwimmfähigen Körper aus einer Vielzahl von teilringförmigen Körpern (50) gebildet ist.

10. Rohreinheit nach Anspruch 9, wobei die teilringförmigen Körper (50) halbringförmig sind.

11. Rohreinheit nach Anspruch 9 oder Anspruch 10, umfassend eine Vielzahl von vorgeformten Rohreinheiten nach einem der vorangehenden Ansprüche, wobei die Enden des Rohrs (10) jeder vorgeformten Rohreinheit über das flexible Isoliermaterial (16) und die schwimmfähigen Körper (14) herausragen und die Enden benachbarter Rohre zusammengefügt sind und die teilringförmigen, schwimmfähigen Körper um die zusammengefügten Enden der Rohre (10) platziert sind.

12. Rohreinheit nach einem der Ansprüche 7 bis 11, wobei mindestens einer der schwimmfähigen Körper (14) röhrenförmig ist.

13. Rohreinheit nach Anspruch 12, umfassend eine Vielzahl von röhrenförmigen, schwimmfähigen Körpern (14).

14. Rohreinheit nach einem der vorangehenden Ansprüche, wobei mindestens einer der schwimmfähigen Körper (14) vollkommen von dem flexiblen Isoliermaterial (16) umgeben ist.

15. Rohreinheit nach Anspruch 14, umfassend eine Vielzahl von schwimmfähigen Körpern (14), die vollkommen von dem flexiblen Isoliermaterial umgeben sind.

16. Rohreinheit nach Anspruch 14 oder Anspruch 15, wobei die Außenseite mindestens teilweise von dem flexiblen Isoliermaterial (16) gebildet ist.

17. Rohreinheit nach Anspruch 16, wobei die Außenseite ganz von dem flexiblen Isoliermaterial (16) gebildet ist.

18. Rohreinheit nach einem der Ansprüche 1 bis 16, wobei die Außenseite mindestens teilweise von mindestens einem der schwimmfähigen Körper (14) gebildet ist.

19. Rohreinheit nach Anspruch 18, wobei die Außenseite mindestens teilweise von einer Vielzahl der schwimmfähigen Körper (14) gebildet ist.

20. Rohreinheit nach Anspruch 18 oder 19, wobei mindestens einer der schwimmfähigen Körper (14) in der die Außenseite bildenden Region bewehrt oder verstärkt ist.

21. Rohreinheit nach einem der vorangehenden Ansprüche, umfassend eine Schicht (28) aus zusätzlichem Material, die sich zwischen mindestens einem der schwimmfähigen Körper (14a) und dem flexiblen Isoliermaterial (16), das mit dem Rohr (10) in Berührung ist, befindet.

22. Rohreinheit nach Anspruch 21, wobei die Schicht (28) aus zusätzlichem Material ein Isoliermaterial umfasst.

23. Rohreinheit nach Anspruch 20 oder Anspruch 21, wobei das zusätzliche Material vom flexiblen Isoliermaterial (16) verschieden ist.

24. Rohreinheit nach Anspruch 23, wobei die Schicht (18) aus zusätzlichem Material mit mindestens einem der schwimmfähigen Körper (14) in Berührung ist.

25. Rohreinheit nach Anspruch 24, wobei die Schicht (28) aus zusätzlichem Material einen Teil des mindestens einen der schwimmfähigen Körper bildet.

26. Rohreinheit, umfassend eine Vielzahl von vorgeformten Rohreinheiten nach einem der vorangehenden Ansprüche, die Ende-an-Ende zusammengefügt sind.

27. Rohreinheit nach Anspruch 26, wobei die Enden des Rohrs (10) jeder vorgeformten Rohreinheit über das flexible Isoliermaterial (16) herausragen.

28. Verfahren zum Herstellen einer Rohreinheit nach einem der vorangehenden Ansprüche, umfassend das Anordnen eines Rohrabschnitts (10) in einer Form, Anordnen der schwimmfähigen Körper (14) in der Form in einem Abstand von dem Rohr, Einbringen eines verflüssigten flexiblen Isoliermaterials in die Form um das Rohr und die schwimmfähigen Körper und Aushärten lassen des verflüssigten Isoliermaterials.

29. Verfahren zum Herstellen einer Rohreinheit nach Anspruch 24 oder Anspruch 25, umfassend das Zusammenfügen der Rohre zweier vorgeformter Rohreinheiten und Formen einer Schicht aus flexiblem Isoliermaterial um die zusammengefügten Enden der zwei zusammengefügten Rohre.

30. Verfahren nach Anspruch 29, umfassend das Anordnen eines zusätzlichen schwimmfähigen Körpers (50) um die zusammengefügten Enden der zusammengefügten Rohre in einem Abstand von den zusammengefügten Rohren und Formen einer Schicht aus flexiblem Isoliermaterial (16) um die zusammengefügten Enden der Rohre und um den schwimmfähigen Körper (50).

31. Verfahren nach Anspruch 30, wobei der zusätzliche schwimmfähige Körper ringförmig ist.

32. Verfahren nach Anspruch 31, wobei der ringförmige Körper aus einer Vielzahl von teilringförmigen Körpern (50) gebildet ist.

## Revendications

1. Une tuyauterie comportant un matériau isolant flexible (16) en contact avec la surface extérieure du tuyau (10) et une pluralité d'éléments flottants discrets espacés (14) noyés dans le matériau isolant flexible autour du tuyau.

2. Une tuyauterie conforme à la revendication 1, comportant une couche du matériau isolant flexible (16) en contact avec le tuyau.

3. Une tuyauterie conforme à la revendication 2, où la couche de matériau isolant flexible (16) en contact avec le tuyau est continue.

4. Une tuyauterie conforme à l'une quelconque des revendications 1 à 3, où les éléments flottants (14) sont espacés dans le sens longitudinal du tuyau.

5. Une tuyauterie conforme à l'une quelconque des revendications précédentes, où les éléments flottants (14) sont régulièrement espacés.

6. Une tuyauterie conforme à l'une quelconque des revendications précédentes, où les éléments flottants adjacents (14) sont séparés par ledit matériau isolant flexible (16).

7. Une tuyauterie conforme à l'une quelconque des revendications précédentes, où au moins un des éléments flottants (14) est annulaire.

8. Une tuyauterie conforme à la revendication 7, comportant une pluralité d'éléments flottants annulaires (14).

9. Une tuyauterie conforme à la revendication 7 ou la revendication 8, où au moins un des éléments flottants annulaires est formé d'une pluralité d'éléments en partie annulaires (50).

10. Une tuyauterie conforme à la revendication 9, où les éléments en partie annulaires (50) sont semi-annulaires.

11. Une tuyauterie conforme à la revendication 9 ou la revendication 10, comportant une pluralité de tuyauteries préformées conformes à l'une quelconque des revendications précédentes, où les extrémités du tuyau (10) de chaque tuyauterie préformée se projettent au-delà du matériau isolant flexible (16) et des éléments flottants (14), et les extrémités des tuyaux adjacents sont raccordées les unes aux autres, et les éléments flottants en partie annulaires sont situés autour des extrémités raccordées des tuyaux (10).

12. Une tuyauterie conforme à l'une quelconque des revendications 7 à 11, ou au moins un des éléments flottants (14) est tubulaire.

13. Une tuyauterie conforme à la revendication 12, comportant une pluralité d'éléments flottants tubulaires (14).

14. Une tuyauterie conforme à l'une quelconque des revendications précédentes, où au moins un des éléments flottants (14) est entièrement entouré par le matériau isolant flexible (16).

15. Une tuyauterie conforme à la revendication 14, comportant une pluralité d'éléments flottants (14) entièrement entourés par le matériau isolant flexible.

16. Une tuyauterie conforme à la revendication 14 ou la revendication 15, où la surface extérieure est au moins partiellement formée par le matériau isolant flexible (16).

17. Une tuyauterie conforme à la revendication 16, où la surface extérieure est entièrement formée par le matériau isolant flexible (16).

18. Une tuyauterie conforme à l'une quelconque des revendications 1 à 16, où la surface extérieure est au moins partiellement formée par au moins un desdits éléments flottants (14).

19. Une tuyauterie conforme à la revendication 18, où la surface extérieure est au moins partiellement formée par une pluralité desdits éléments flottants (14).

20. Une tuyauterie conforme à la revendication 18 ou 19, où au moins un desdits éléments flottants (14) est renforcé ou consolidé dans cette région formant la surface extérieure.

21. Une tuyauterie conforme à l'une quelconque des revendications précédentes, comportant une couche (28) de matériau supplémentaire situé entre au moins un des éléments flottants (14a) et le matériau isolant flexible (16) en contact avec le tuyau (10).

22. Une tuyauterie conforme à la revendication 21, où la couche (28) de matériau supplémentaire comporte un matériau isolant.

23. Une tuyauterie conforme à la revendication 20 ou la revendication 21, où le matériau supplémentaire est différent du matériau isolant flexible (16).

24. Une tuyauterie conforme à la revendication 23, où la couche (18) de matériau supplémentaire est en contact avec au moins un des éléments flottants (14).

25. Une tuyauterie conforme à la revendication 24, où la couche (28) de matériau supplémentaire forme une partie du au moins un des éléments flottants.

26. Une tuyauterie comportant une pluralité de tuyauteries préformées conformes à l'une quelconque des revendications précédentes, raccordées bout à bout.

27. Une tuyauterie conforme à la revendication 26, où les extrémités du tuyau (10) de chaque tuyauterie préformée se projettent au-delà du matériau isolant flexible (16).

28. Un procédé de fabrication d'une tuyauterie conforme à l'une quelconque des revendications précédentes, comportant le positionnement d'une section de tuyau (10) dans un moule, le positionnement des éléments flottants (14) dans le moule, espacés du tuyau, l'introduction d'un matériau isolant flexible liquéfié dans le moule autour du tuyau et des éléments flottants, et l'attente du durcissement du matériau isolant flexible liquéfié.

29. Un procédé de fabrication d'une tuyauterie conforme à la revendication 24 ou la revendication 25, comportant le raccordement des tuyaux de deux tuyauteries préformées, et le moulage d'une couche de matériau isolant flexible autour des extrémités raccordées des deux tuyaux raccordés.

30. Un procédé conforme à la revendication 29, comportant le positionnement d'un élément flottant supplémentaire (50) autour des extrémités raccordées des tuyaux raccordés, espacés des tuyaux raccordés, et le moulage d'une couche de matériau isolant flexible (16) autour des extrémités raccordées des tuyaux et autour de l'élément flottant (50).

31. Un procédé conforme à la revendication 30, où l'élément flottant supplémentaire est annulaire.

32. Un procédé conforme à la revendication 31, où l'élément annulaire est formé d'une pluralité d'éléments en partie annulaires (50).
